# EUROPEAN PATENT SPECIFICATION

(11) **EP 1 916 281 B1**
(45) Date of publication and mention of the grant of the patent: **23.03.2011**
(21) Application number: 07115538.6
(22) Date of filing: 03.09.2007
(51) Int. Cl.: C09D 11/00

(54) **Phase Change Inks**
Phasenwechseltinten
Encres de changement de phase

(30) Priority: 26.10.2006 US 553260
(43) Date of publication of application: 30.04.2008
(73) Proprietor: Xerox Corporation, Rochester, NY 14644 (US)
(72) Inventor: Turek, Caroline M., Hamilton Ontario L8P 4R6 (CA); Wong, Raymond W., Mississauga Ontario L5M 4G8 (CA); Goredema, Adela, Mississauga Ontario L5H 3V1 (CA); Wagner, Christopher A., Etobicoke Ontario M9A 1L3 (CA)
(74) Representative: Grünecker, Kinkeldey, Stockmair & Schwanhäusser Anwaltssozietät

(56) References cited:
- US-A1- 2004 261 656
- US-B1- 6 858 070

## Description

Described herein are inks such as phase change or hot melt inks that have a colorant, such as a pigment, substantially evenly dispersed throughout the non-polar ink vehicle.

The phase change ink compositions illustrated herein in embodiments are solid at room temperature, for example from 20°C to 27°C, and are suitable for ink jet printing processes, particularly piezoelectric and acoustic ink jet printing processes.

In embodiments, the phase change ink comprises an ink vehicle, a colorant and at least one dispersant comprising at least one triamide, and at least one bis-urethane. Also, disclosed are methods of making such phase change inks.

Ink jetting devices are known in the art. As described In U.S. Patent No. 6,547,380 ink jet printing systems are generally of two types: continuous stream and drop-on-demand. In continuous stream ink jet systems, ink is emitted In a continuous stream under pressure through at least one orifice or nozzle. The stream is perturbed, causing it to break up into droplets at a fixed distance from the orifice. At the break-up point, the droplets are charged in accordance with digital data signals and passed through an electrostatic field that adjusts the trajectory of each droplet In order to direct it to a gutter for recirculation or a specific location on a recording medium. In drop-on-demand systems, a droplet is expelled from an orifice directly to a position on a recording medium in accordance with digital data signals. A droplet is not formed or expelled unless it is to be placed on the recording medium. There are generally three types of drop-on-demand ink Jet systems. One type of drop-on-demand system is a piezoelectric device that has as its major components an ink filled channel or passageway having a nozzle on one end and a piezoelectric transducer near the other end to produce pressure pulses. Another type of drop-on-demand system is known as acoustic ink printing. As is known, an acoustic beam exerts a radiation pressure against objects upon which it impinges. Thus, when an acoustic beam impinges on a free surface (i.e., liquid/air interface) of a pool of liquid from beneath, the radiation pressure which it exerts against the surface of the pool may reach a sufficiently high level to release individual droplets of liquid from the pool, despite the restraining force of surface tension. Focusing the beam on or near the surface of the pool intensifies the radiation pressure it exerts for a given amount of input power. Still another type of drop-on-demand system is known as thermal ink jet, or bubble jet, and produces high velocity droplets. The major components of this type of drop-on-demand system are an ink filled channel having a nozzle on one end and a heat generating resistor near the nozzle. Printing signals representing digital information originate an electric current pulse in a resistive layer within each ink passageway near the orifice or nozzle, causing the ink vehicle (usually water) in the immediate vicinity to vaporize almost instantaneously and create a bubble. The ink at the orifice is forced out as a propelled droplet as the bubble expands.

In a typical design of a piezoelectric ink jet device, the image is applied by jetting appropriately colored inks during four to eighteen rotations (incremental movements) of a substrate such as an image receiving member or intermediate transfer member with respect to the ink jetting head, i.e., there is a small translation of the printhead with respect to the substrate in between each rotation. This approach simplifies the printhead design, and the small movements ensure good droplet registration. At the jet operating temperature, droplets of liquid ink are ejected from the printing device. When the ink droplets contact the surface of the recording substrate, either directly or via an intermediate heated transfer belt or drum, they quickly solidify to form a predetermined pattern of solidified ink drops. Phase change ink jet processes are well known and are described, for example, in U.S. Patents Nos. 4,601,777, 4,251,824, 4,410,899, 4,412,224 and 4,532,530.

Ink jet printing processes may employ Inks that are solid at room temperature and liquid at elevated temperatures. Such Inks may be referred to as hot melt inks or phase change inks. For example, U.S. Patent No. 4,490,731, discloses an apparatus for dispensing solid ink for printing on a substrate such as paper.

In thermal ink jet printing processes employing hot melt Inks, the solid ink is melted by the heater in the printing apparatus and utilized (i.e., jetted) as a liquid in a manner similar to that of conventional thermal ink jet printing. Upon contact with the printing substrate, the molten ink solidifies rapidly, enabling the colorant to substantially remain on the surface of the substrate instead of being carried into the substrate (for example, paper) by capillary action, thereby enabling higher print density than is generally obtained with liquid inks. Advantages of a phase change ink in ink jet printing thus include elimination of potential spillage of the ink during handling, a wide range of print density and quality, minimal paper cockle or distortion, and enablement of indefinite periods of non-printing without the danger of nozzle clogging, even without capping the nozzles.

U.S. Patents Nos. 5,006,170 and 5,122,187 disclose hot melt ink compositions suitable for ink jet printing which comprise a colorant, a binder, and a propellant.

U.S. Patent No. 4,889,560 discloses a phase change ink carrier composition combined with a colorant to form a phase change ink composition.

EP0816445, EP0816449, EP0816448 and EP0816446 disclose phase change ink compositions suitable for jet printing, which include urethanes as part of the ink vehicle.

US-A-2004/0261656 discloses a phase change ink composition comprising (a) a colorant and (b) a carrier comprising a polyamide, wherein the polyamide component of the carrier contains at least about 10% by weight of a branched triamide.

US-A-6,858,070 relates to an ink composition comprising (a) an ink carrier which comprises a monoamide, a tetra-amide, or a mixture thereof; (b) a polyalkylene succinimide, and (c) pigment particles.

Phase change inks used in ink jet printing apparatuses have a number of advantages ranging from vibrant colors and expansive color gamut. It is still desired to produce a phase change ink having a colorant, such as a pigment, substantially evenly dispersed throughout the entire ink vehicle. It is particularly desired to produce phase change inks with at least one pigment that have high stability.

The present invention provides a phase change ink comprising an ink vehicle, at least one colorant, at least one triamide and at least one bis-urethane, wherein the bis-urethane has a general formula of: wherein the bis-urethane has a 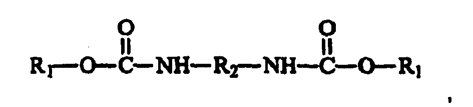 wherein each R₁ is independent of each other (i) an alkyl group having from 1 carbon atoms to 200 carbon atoms, (ii) an aryl group having from 6 carbon atoms to 200 carbon atoms, (iii) an arylalkyl group having from 6 carbon atoms to 200 carbon atoms, or (iv) an alkylaryl group having from 6 carbon atoms to 200 carbon atoms, and R₂ is (i) an arylene group having from 6 carbon atoms to 200 carbon atoms, (ii) an arylalkylene group having from 7 carbon atoms to 200 carbon atoms, or (iii) an alkylarylene group having from 7 carbon atoms to 200 carbon atoms.

The present invention further provides an ink jet system, comprising:
at least one phase change ink and
an ink jet device including an ink jet head, wherein the at least one phase change ink is the above phase change ink.

The present invention also provides a method of forming the above comprising:
an extrusion step and a melt-mixing step,
the extrusion step comprising preparing a pigment dispersion mixture in a container by mixing at least one triamide, at least one bis-urethane and at least one colorant to form a mixture, introducing the mixture into an extruder, and extruding the mixture,
the melt-mixing step comprising melt-mixing the extruded mixture together with other ink ingredients including an ink vehicle to form the ink.

Preferred embodiments are set forth in the subclaims.

The phase change inks include an ink vehicle that is solid at temperatures of 20°C to 27°C, for example room temperature, and specifically are solid at temperatures below about 40°C. However, the inks change phase upon heating, and are in a molten state at jetting temperatures. Thus, the inks have a viscosity of from 1 to 40 centipoise (cP), such as from 5 to 15 cP or from 8 to 12 cP, at an elevated temperature suitable for ink jet printing, such as temperatures of from 50°C to 150°C.

In this regard, the inks herein may be low energy inks. Low energy inks are solid at a temperature below about 40°C and have a viscosity of from 5 to 15 cP at a jetting temperature of from 50°C to 150°C, such as from 70°C to 130°C or from 80°C to 130°C. The inks jet at lower temperatures, and thus require lower amounts of energy for jetting.

Any suitable ink vehicle can be employed. Suitable vehicles can include paraffins, microcrystalline waxes, polyethylene waxes, ester waxes, fatty acids and other waxy materials, fatty amide containing materials, sulfonamide materials, resinous materials made from different natural sources (tall oil rosins and rosin esters, for example), and many synthetic resins, oligomers, polymers, and copolymers such as further discussed below, and mixtures thereof.

Examples of suitable specific ink vehicles include, for example, ethylene/propylene copolymers, such as those available from Baker Petrolite having the general formula 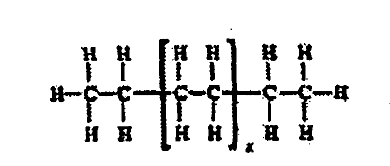 wherein x is an integer of from 1 to 200, such as from 5 to 150 or from 12 to 105. These materials may have a melting point of from 60°C to 150°C, such as from 70°C to 140°C or from 80°C to 130°C and a molecular weight (Mn) of from 100 to 5,000, such as from 200 to 4,000 or from 400 to 3,000. Commercial examples of such copolymers include, for example, Petrolite CP-7 (Mn = 650), Petrolite CP-11 (Mn = 1,100), Petrolite CP-12 (Mn = 1,200), and the like.
Examples of wax ink vehicles include PW400 (Mn about 400), distilled PW400, in one embodiment having a viscosity of 10% to 100% higher than the viscosity of the undistilled POLYWAX® 400 at about 110°C, POLYWAX® 500 (Mn about 500), distilled POLYWAX® 500, in one embodiment having a viscosity of 10% to 100% higher than the viscosity of the undistilled POLYWAX® 500 at about 110°C, POLYWAX 655 (Mn about 655), distilled POLYWAX® 655, in one embodiment having a viscosity of 10% to 50% lower than the viscosity of the undistilled POLYWAX® 655 at about 110°C, and in yet another embodiment having a viscosity of 10% to 50% higher than the viscosity of the undistilled POLYWAX® 655 at about 110°C, POLYWAX 850 (Mn about 850), POLYWAX 1000 (Mn about 1,000), and the like.

Another type of ink vehicle may be n-paraffinic, branched paraffinic, and/or aromatic hydrocarbons, typically with from 5 to 100, such as from 20 to 180 or from 30 to 60 carbon atoms, generally prepared by the refinement of naturally occurring hydrocarbons, such as BE SQUARE 185 and BE SQUARE 195, with molecular weights (Mn) of from 100 to 5,000, such as from 250 to 1,000 or from 500 to 800, for example such as available from Baker Petrolite.

Highly branched hydrocarbons, typically prepared by olefin polymerization, such as the VYBAR materials available from Baker Petrolite, including VYBAR 253 (Mn = 520), VYBAR 5013 (Mn = 420), and the like, may also be used. In addition, the ink vehicle may be an ethoxylated alcohol, such as available from Baker Petrolite and of the general formula 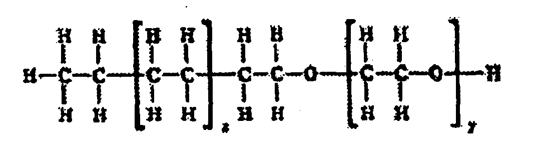 wherein x is an integer of from 1 to 50, such as from 5 to 40 or from 11 to 24 and y is an integer of from 1 to 70, such as from 1 to 50 or from 1 to 40. The materials may have a melting point of from 60°C to 150°C, such as from 70°C to 120°C or from 80°C to 110°C and a molecular weight (Mn) range of from 100 to 5,000, such as from 500 to 3,000 or from 500 to 2,500.

As an additional example, mention may be made of fatty amides, such as monoamides, tetra-amides, mixtures thereof, and the like, for example such as described in U.S. Patent No. 6,858,070. . Suitable monoamides may have a melting point of at least 50°C, for example from 50°C to 150°C, although the melting point can be below this temperature. Specific examples of suitable monoamides include, for example, primary monoamides and secondary monoamides. Stearamide, such as KEMAMIDE S available from Witco Chemical Company and CRODAMIDE S available from Croda, behenamide/arachidamide, such as KEMAMIDE B available from Witco and CRODAMIDE BR available from Croda, oleamide, such as KEMAMIDE U available from Witco and CRODAMIDE OR available from Croda, technical grade oleamide, such as KEMAMIDE O available from Witco, CRODAMIDE O available from Croda, and UNISLIP 1753 available from Uniqema, and erucamide such as KEMAMIDE E available from Witco and CRODAMIDE ER available from Croda, are some examples of suitable primary amides. Behenyl behenamide, such as KEMAMIDE EX666 available from Witco, stearyl stearamide, such as KEMAMIDE S-180 and KEMAMIDE EX-672 available from Witco, stearyl erucamide, such as KEMAMIDE E-180 available from Witco and CRODAMIDE 212 available from Croda, erucyl erucamide, such as KEMAMIDE E-221 available from Witco, oleyl palmitamide, such as KEMAMIDE P-181 available from Witco and CRODAMIDE 203 available from Croda, and erucyl stearemide, such as KEMAMIDE S-221 available from Witco, are some examples of suitable secondary amides. Additional suitable amide materials include KEMAMIDE W40 (N,N'-ethylenebisstearamide), KEMAMIDE P181 (oleyl palmitamide), KEMAMIDE W45 (N,N'-thylenebisstearamide), and KEMAMIDE W20 (N,N'-ethylenebisoleamide).

High molecular weight linear alcohols, such as those available from Baker Petrolite and of the general formula 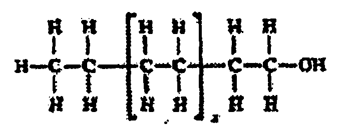 wherein x is an integer of from 1 to 50, such as from 5 to 35 or from 11 to 23, may also be used as the ink vehicle. These materials may have a melting point of from 50°C to 150°C, such as from 70°C to 120°C or from 75°C to 110°C, and a molecular weight (Mn) range of from 100 to 5,000, such as from 200 to 2,500 or from 300 to 1,500.

Another example includes modified maleic anhydride hydrocarbon adducts of polyolefins prepared by graft copolymerization, such as those available from Baker Petrolite and of the general formulas 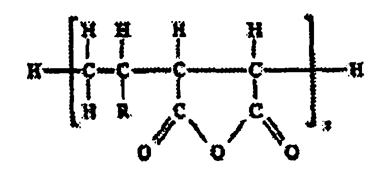 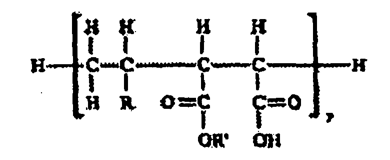 wherein R is an alkyl group with from 1 to 50, such as from 5 to 35 or from 6 to 28 carbon atoms, R' is an ethyl group, a propyl group, an isopropyl group, a butyl group, an isobutyl group, or an alkyl group with from 5 to 500, such as from 10 to 300 or from 20 to 200 carbon atoms, x is an integer of from 9 to 13, and y is an integer of from 1 to 50, such as from 5 to 25 or from 9 to 13, and having melting points of from 50°C to 150°C, such as from 60°C to 120°C or from 70°C to 100°C; those available from Baker Petrolite and of the general formula 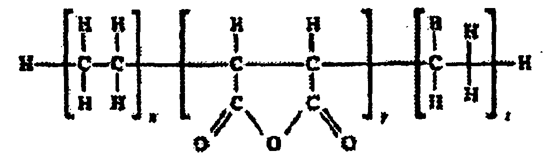 wherein x is an integer of from 1 to 50, such as from 5 to 25 or from 9 to 13, y is 1 or 2, and z is an integer of from 1 to 50, such as from 5 to 25 or from 9 to 13; and those available from Baker Petrolite and of the general formula 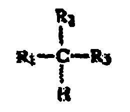 wherein R₁ and R₃ are hydrocarbon groups and R₂ is either of one of the general formulas 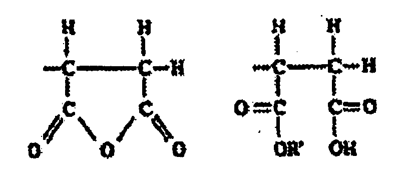 or a mixture thereof, wherein R' is an isopropyl group, which materials may have melting points of from 70°C to 150°C, such as from 80°C to 130°C or from 90°C to 125°C, with examples of modified maleic anhydride copolymers including CERAMER 67 (Mn = 655, Mw/Mn =1.1), CERAMER 1608 (Mn = 700, Mw/Mn =1.7), and the like.

Additional examples of suitable ink vehicles for the phase change inks include rosin esters, such as glyceryl abietate (KE-100^{®}): polyamides; dimer acid amides; fatty acid amides, including ARAMID C; epoxy resins, such as EPOTUF 37001, available from Riechold Chemical Company; fluid paraffin waxes; fluid microcrystalline waxes; Fischer-Tropsch waxes; polyvinyl alcohol resins; polyols; cellulose esters; cellulose ethers; polyvinyl pyridine resins; fatty acids; fatty acid esters; poly sulfonamides, including KETJENFLEX MH and KETJENFLEX MS80; benzoate esters, such as BENZOFLEX S552, available from Velsicol Chemical Company; phthalate plasticizers; citrate plasticizers; maleate plasticizers; polyvinyl pyrrolidinone copolymers; polyvinyl pyrrolidone/polyvinyl acetate copolymers; novolac resins, such as DUREZ 12 686, available from Occidental Chemical Company; and natural product waxes, such as beeswax, montan wax, candelilla wax, GILSONITE (American Gilsonite Company), and the like; mixtures of linear primary alcohols with linear long chain amides or fatty acid amides, such as those with from about 6 to about 24 carbon atoms, including PARICIN 9 (propylene glycol monohydroxystearate), PARICIN 13 (glycerol monohydroxystearate), PARICIN 15 (ethylene glycol monohydroxystearate), PARICIN 220 (N(2-hydroxyethyl)-12-hydroxystearamide), PARICIN 285 (N,N'-ethylene-bis-12-hydroxystearamide), FLEXRICIN 185 (N,N'-ethylene-bis-ricinoleamide), and the like. Further, linear long chain sulfones with from about 4 to about 16 carbon atoms, such as diphenyl sulfone, n-amyl sulfone, n-propyl sulfone, n-pentyl sulfone, n-hexyl sulfone, n-heptyl sulfone, n-octyl sulfone, n-nonyl sulfone, n-decyl sulfone, n-undecyl sulfone, n-dodecyl sulfone, n-tridecyl sulfone, n-tetradecyl sulfone, n-pentadecyl sulfone, n-hexadecyl sulfone, chlorophenyl methyl sulfone, and the like, are suitable ink vehicle materials.

The ink vehicle may comprise one or more of the aforementioned suitable vehicles. As used herein, "one or more" and "at least one" refers to, for example, from 1 10, such as from 1 to 8 or from 1 to 5, of any given feature disclosed herein.

The ink vehicle may comprises from 25% to 99.5% by weight of the ink, for example from 30% to 90% or from 50% to 85% by weight of the ink.

The ink image discussed herein may be formed from any such suitable phase change ink, for example, those inks disclosed in U.S. Patent No. 4,490,731, U.S. Patent No. 5,006,170 and U.S. Patent No. 5,122,187,

The inks disclosed herein may contain any suitable colorant which may include at least one pigment As used herein the term "colorant" includes pigment, dye, mixtures of dyes, mixtures of pigments, mixtures of dyes and pigments, and the like.

In embodiments, the colorant/pigments may be from 0.5 weight percent to 40 weight percent of the ink, such as from weight percent to 8 weight percent or from 1.5 weight percent to 6 weight percent of the ink. Colorants suitable for use herein include colorant particles having an average particle size of from 15 nm to 200nm, such as from 15 nm to 100 nm or from 15 nm to 50 nm.

In embodiments, colorants suitable for use herein may be black, such as carbon black. U.S. Patent No. 6,878,198, U.S. Patent No. 6,858,070, EP1535974 and EP1535973 discoses a phase change ink that demonstrates high stability. However, many phase change inks demonstrate a propensity to weep in the printhead of an inkjet printing apparatus. Thus, as explained above, it is still desired to produce phase change inks having a colorant, such as a pigment, that is dispersed in the ink vehicle, and does not demonstrate any weeping.

Weeping refers to the uncontrolled flow of ink from the nozzles of an ink jet printing apparatus onto the face of the printhead of an ink jet printing apparatus, for example as may occur following the passage of the wiper blade across the nozzles or ink jet heads during a purge cycle. Some of the ramifications of weeping include excessive ink purge volume, color mixing in the jets resulting in poor color reproduction in subsequent prints, and potential jetting reliability/robustness issues.

In pigment-based inks in particular, such as those having carbon black particles, weeping may be observed. There are a few challenges in effectively dispersing pigments in the current phase change ink vehicles. For example, the non-polar components in the ink vehicle may hinder pigment stability in the ink. Typically, dispersants may be used to stabilize the pigment particles in the non-polar ink vehicle, but while some dispersants assist with stability, they do not address weeping.

To enable dispersion of the pigment colorants in the liquid vehicle, the dispersant generally comprises first functional groups that anchor the dispersant to the pigment particles and second functional groups that are compatible with the ink vehicle. The first functional groups can suitably anchor or adsorb to the pigment particle in any suitable manner, such as hydrogen bonding, chemical bonding, acid-base reaction, Van der Waals interactions, and the like. Thus, examples of suitable first functional groups that anchor the dispersant to the pigment particles include such functional groups as esters, amides, carboxylic acids, hydroxyl groups, anhydrides, urethanes, ureas, amines, amides and salt groups such as quaternary ammonium salts, and the like. The first functional groups anchor the dispersant to the colorant particles such that the dispersant is, for example, adsorbed, attached to or grafted to the pigment particle. Likewise, examples of the second functional groups that are compatible with the ink vehicle include groups such as alkyl groups, which can be straight or branched, saturated or unsaturated and the like. These second functional groups are compatible with, in particular, low polarity ink vehicle components.

Dispersants suitable for use herein that reduce weeping in the ink include a combination of at least one triamide and at least one bis-urethane. By "reducing weeping," it is meant that the ink including the dispersants disclosed herein demonstrates substantially no weeping. "At least one" as used herein refers to, for example, from 0.5 to 40 such as from 1 to 20 or from 1 to 10 for each of the triamides, and bis-urethanes. In embodiments, the ink may include at least one triamide, and at least one bis-urethane.

Triamides suitable for use herein include linear triamides, which are molecules where all three amide groups are drawn in the same molecular chain or branch. Examples of linear triamides include those triamides having the following formulas:

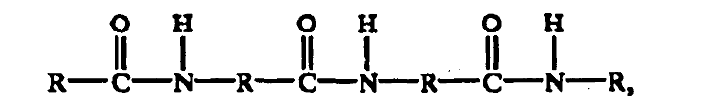

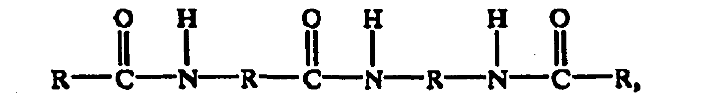

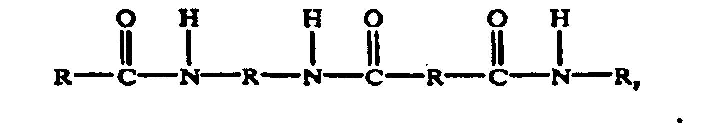

R can be any hydrocarbon having from 1 to 200, carbon atoms, such as from 25 to 150 carbon atoms or from 30 to 100 carbon atoms.

Linear triamides can further include those wherein a line can be drawn through the three amide groups, even if one would ordinarily draw a different line. One example of such a triamide can be expressed by the following formula: 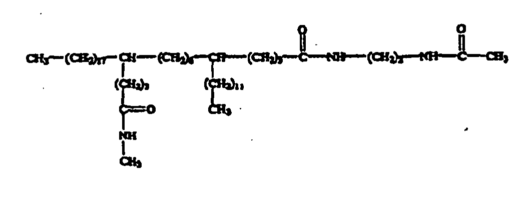 which can also be drawn as:

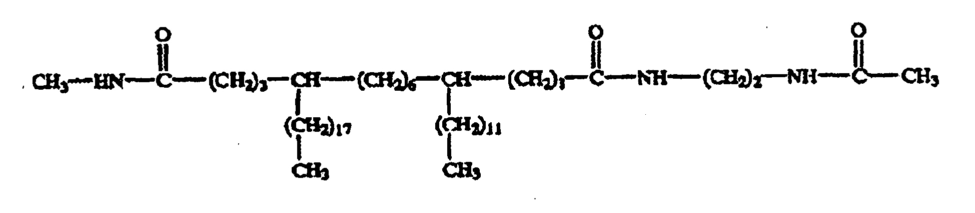

Examples of branched triamides suitable for use herein include those having the formulas: 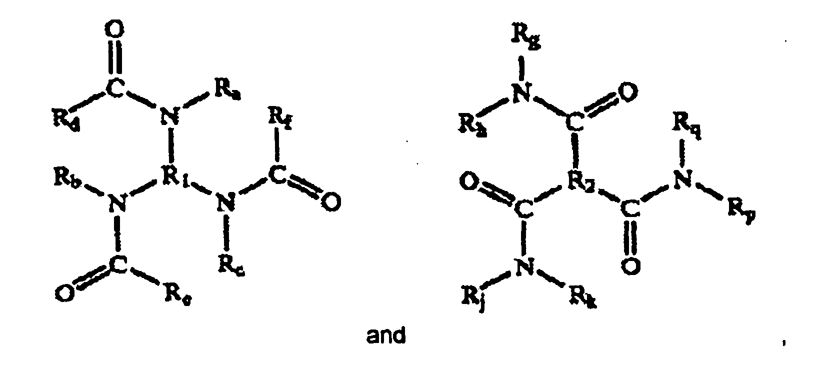 and the like are disclosed in U.S. Patent No. 6,860,930. In such branched triamides, R₁ and R₂ may be (i) an alkylene group (including linear, branched, saturated, unsaturated, cyclic, substituted, and unsubstituted alkylene groups, and wherein hetero atoms, such as oxygen, nitrogen, sulfur, silicon, phosphorus, and the like either may or may not be present in the alkylene group), having from 3 carbon atoms to 200 carbon atoms, such as from 15 carbon atoms to 150 carbon atoms or from 21 carbon atoms to 100 carbon atoms, although the number of carbon atoms can be outside of these ranges, (ii) an arylene group (including unsubstituted and substituted arylene groups, and wherein hetero atoms, such as oxygen, nitrogen, sulfur, silicon, phosphorus, and the like either may or may not be present in the arylene group), having from 6 carbon atoms to 200 carbon atoms, such as from 10 carbon atoms to 150 carbon atoms or from 14 carbon atoms to 100 carbon atoms, although the number of carbon atoms can be outside of these ranges, (iii) an arylalkylene group (including unsubstituted and substituted arylalkylene groups, wherein the alkyl portion of the arylalkylene group can be linear, branched, saturated, unsaturated, and/or cyclic, and wherein hetero atoms, such as oxygen, nitrogen, sulfur, silicon, phosphorus, and the like either may or may not be present in either or both of the alkyl portion and the aryl portion of the arylalkylene group), having from 7 carbon atoms to 200 carbon atoms, such as from 8 carbon atoms to 150 carbon atoms or from 9 carbon atoms to 100 carbon atoms, although the number of carbon atoms can be outside of these ranges, such as benzylene or the like, or (iv) an alkylarylene group (including unsubstituted and substituted alkylarylene groups, wherein the alkyl portion of the alkylarylene group can be linear, branched, saturated, unsaturated, and/or cyclic, and wherein hetero atoms, such as oxygen, nitrogen, sulfur, silicon, phosphorus, and the like either may or may not be present in either or both of the alkyl portion and the aryl portion of the alkylarylene group), having from 7 carbon atoms to 200 carbon atoms, such as from 8 carbon atoms to 150 carbon atoms or from 9 carbon atoms to 100 carbon atoms, although the number of carbon atoms can be outside of these ranges, such as tolylene or the like. Rₐ, R_{b}, R_{c}, R_{g}, Rₕ, Rᵢ, Rₖ, Rₚ and Rq may each independently be (i) a hydrogen atom, (ii) an alkyl group (including linear, branched, saturated, unsaturated, cyclic, substituted, and unsubstituted alkyl groups, and wherein hetero atoms, such as oxygen, nitrogen, sulfur, silicon, phosphorus, and the like either may or may not be present in the alkyl group), in embodiments from 1 carbon atoms to 200 carbon atoms, such as from 6 carbon atoms to 150 carbon atoms or from 10 carbon atoms to 100 carbon atoms, although the number of carbon atoms can be outside of these ranges, (iii) an aryl group (including unsubstituted and substituted aryl groups, and wherein hetero atoms, such as oxygen, nitrogen, sulfur, silicon, phosphorus, and the like either may or may not be present in the aryl group), having from 6 carbon atoms to 200 carbon atoms, such as from 10 carbon atoms to 150 carbon atoms or from 14 carbon atoms to 100 carbon atoms, although the number of carbon atoms can be outside of these ranges, (iv) an arylalkyl group (including unsubstituted and substituted arylalkyl groups, wherein the alkyl portion of the arylalkyl group can be linear, branched, saturated, unsaturated, and/or cyclic, and wherein hetero atoms, such as oxygen, nitrogen, sulfur, silicon, phosphorus, and the like either may or may not be present in either or both of the alkyl portion and the aryl portion of the arylalkyl group), having from 6 carbon atoms to 200 carbon atoms, such as from 7 carbon atoms to 150 carbon atoms or from 8 carbon atoms to 100 carbon atoms, although the number of carbon atoms can be outside of these ranges, such as benzyl or the like, or (v) an alkylaryl group (including unsubstituted and substituted alkylaryl groups, wherein the alkyl portion of the alkylaryl group can be linear, branched, saturated, unsaturated, and/or cyclic, and wherein hetero atoms, such as oxygen, nitrogen, sulfur, silicon, phosphorus, and the like either may or may not be present in either or both of the alkyl portion and the aryl portion of the alkylaryl group), having from carbon atoms to 200 carbon atoms, such as from 7 carbon atoms to 150 carbon atoms or from 8 carbon atoms to 100 carbon atoms, although the number of carbon atoms can be outside of these ranges, such as tolyl or the like. R_{d}, Rₑ and R_{f} may each independently be (i) an alkyl group as described above, (ii) an aryl group as described above, (iii) an arylalkyl group as described above, or (iv) an alkylaryl group as described above.

The triamide is present in the ink in amounts of from 0.5 weight percent to 40 weight percent, such as from 5 weight percent to 18 weight percent or from 8 weight percent to 13 weight percent of the ink.

Bis-urethanes suitable for use herein include those bis-urethanes having the general formula: 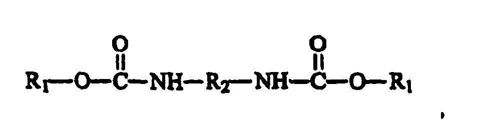 wherein each R₁ may each independently be (i) an alkyl group (including linear, branched, saturated, unsaturated, cyclic, substituted, and unsubstituted alkyl groups, and wherein hetero atoms, such as oxygen, nitrogen, sulfur, silicon, phosphorus, and the like either may or may not be present in the alkyl group), in embodiments from 1 carbon atoms to 200 carbon atoms, such as from 6 carbon atoms to 150 carbon atoms or from 10 carbon atoms to 100 carbon atoms, although the number of carbon atoms can be outside of these ranges, (ii) an aryl group (including unsubstituted and substituted aryl groups, and wherein hetero atoms, such as oxygen, nitrogen, sulfur, silicon, phosphorus, and the like either may or may not be present in the aryl group), having from 6 carbon atoms to 200 carbon atoms, such as from 10 carbon atoms to 150 carbon atoms or from 14 carbon atoms to 100 carbon atoms, although the number of carbon atoms can be outside of these ranges, (iii) an arylalkyl group (including unsubstituted and substituted arylalkyl groups, wherein the alkyl portion of the arylalkyl group can be linear, branched, saturated, unsaturated, and/or cyclic, and wherein hetero atoms, such as oxygen, nitrogen, sulfur, silicon, phosphorus, and the like either may or may not be present in either or both of the alkyl portion and the aryl portion of the arylalkyl group), having from 6 carbon atoms to 200 carbon atoms, such as from 7 carbon atoms to 150 carbon atoms or from carbon atoms to 100 carbon atoms, although the number of carbon atoms can be outside of these ranges, such as benzyl or the like, or (iv) an alkylaryl group (including unsubstituted and substituted alkylaryl groups, wherein the alkyl portion of the alkylaryl group can be linear, branched, saturated, unsaturated, and/or cyclic, and wherein hetero atoms, such as oxygen, nitrogen, sulfur, silicon, phosphorus, and the like either may or may not be present in either or both of the alkyl portion and the aryl portion of the alkylaryl group), having from 6 carbon atoms to 200 carbon atoms, such as from 7 carbon atoms to 150 carbon atoms or from 8 carbon atoms to 100 carbon atoms, although the number of carbon atoms can be outside of these ranges, such as tolyl or the like, and R₂ may be (l) an arylene group (including unsubstituted and substituted arylene groups), having from 6 carbon atoms to 200 carbon atoms, such as from 10 carbon atoms to 150 carbon atoms or from 14 carbon atoms to 100 carbon atoms, although the number of carbon atoms can be outside of these ranges, (ii) an arylalkylene group (including unsubstituted and substituted arylalkylene groups, wherein the alkyl portion of the arylalkylene group can be linear, branched, saturated, unsaturated, and/or cyclic), having from 7 carbon atoms to 200 carbon atoms, such as from 8 carbon atoms to 150 carbon atoms or from 9 carbon atoms to 100 carbon atoms, although the number of carbon atoms can be outside of these ranges, or (iii) an alkylarylene group (including unsubstituted and substituted alkylarylene groups, wherein the alkyl portion of the alkylarylene group can be linear, branched, saturated, unsaturated, and/or cyclic), having from 7 carbon atoms to 200 carbon atoms, such as from 8 carbon atoms to 150 carbon atoms or from 9 carbon atoms to 100 carbon atoms, although the number of carbon atoms can be outside of these ranges.

In embodiments, R₁ is derived from an oxidized petroleum or synthetic wax and R₂ is of the formula:

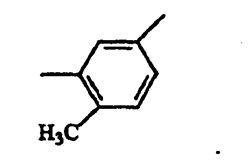

Examples of commercial bis-urethanes suitable for use herein include PETROLITE CA-11^{®}, PETROLITE WB-5^{®} and PETROLITE WB-17^{®}, all available from Baker Petrolite.

The bis-urethane may be present in the ink in amounts of from 0.5 weight percent to 40 weight percent, such as from 1 weight percent to 8 weight percent or from 1.5 weight percent to 5 weight percent of the ink.

Optionally, a propellant may be contained in the phase change ink. Suitable propellants for the phase change ink, present in any effective amount such as from 10 to 90 percent by weight, for example from 20 to 50 percent by weight, of the ink generally have melting points of from 50°C to 150°C, for example from 80°C to 120°C. In another embodiment, the propellants generally have a boiling point of from 180°C to 250°C, for example from 200°C to 230°C. Further, the surface tension of the propellant in its liquid state at the operating temperature of the ink may be from 20 to 65 dynes per centimeter, for example from 40 to 65 dynes per centimeter, to enhance refill rates, paper wetting, and color mixing. In addition, the propellants ideally have a viscosity at the operating temperature of the ink of from 1 to 20 cP, for example from 1 to 15 cP, to enhance refill, jettability, and substrate penetration. The propellant may also be thermally stable in its molten state so that it does not undergo decomposition to yield gaseous products or to form heater deposits.

The ink of embodiments may further include conventional additives to take advantage of the known functionality associated with such conventional additives. Such additives may include, for example, biocides, defoamers, slip and leveling agents, plasticizers, viscosity modifiers, antioxidants, UV absorbers, etc.

When present, the optional additives may each, or in combination, be present in the ink in any desired or effective amount, such as from 1 percent to 10 percent by weight of the ink or from 3 percent to 5 percent by weight of the ink.

in embodiments, the ink may be prepared by first preparing the ink vehicle in a first container by mixing the components of the ink vehicle at temperatures of from 90°C to 150°C, such as from 100°C to 145°C or from 110°C to 140°C. In a separate container, the triamide in powder form, the bis-urethane in powder form and the pigment in powder form are all mixed together. The powder mixture may then be introduced into an extruder and the like, for example a twin screw extruder. The contents in the extruder may then be mixed at temperatures of from 45°C to 90°C, such as from 50°C to 85°C or from 60°C to 80°C at 10 RPM to 200 RPM, such as at 25 RPM to 100 RPM or at 40 RPM to 65 RPM. The contents may then be extruded and melt-mixed with the ink vehicle in the first container to form an ink. When the contents are melt-mixed, they may also be high shear mixed.

In further embodiments, the ink may be prepared by first preparing the ink vehicle in a first container by mixing the components of the ink vehicle and the bis-urethane at temperatures of from 90°C to 150°C, such as from 100°C to 145°C or from 110°C to 140°C. In a separate container, the triamide in powder form and the pigment in powder form are all mixed together. The powder mixture may then be introduced into an extruder and the like, for example a twin screw extruder. The contents in the extruder may then be mixed at temperatures of from 45°C to 110°C, such as from 60°C to 85°C or from 60°C to 80°C at 10 RPM to 200 RPM, such as at 25 RPM to 100 RPM or at 40 RPM to 65 RPM. The contents may then be extruded and melt-mixed with the ink vehicle in the first container to form an ink. When the contents are melt-mixed, they may also be high shear mixed.

In yet further embodiments, the ink may be prepared as explained above, except that the powder mixture is not introduced into an extruder. In other words, the powder mixture is not extruded prior to melt-mixing with the ink vehicle. As In other embodiments, when the ink contents are melt-mixed, they may also be high shear mixed.

The inks disclosed herein may exhibit Newtonian behavior from 100°C to 130°C, such as from 110°C to 120°C, at a shear rate of 10⁻² to 10⁴ S⁻¹, such as from 10⁻¹ to 10³ S⁻¹.

Printed images may be generated with the ink described herein by incorporating the ink into an ink jet device, for example a thermal ink jet device, an acoustic ink jet device or a piezoelectric ink jet device, heating the ink to an ink jet temperature, and concurrently causing droplets of the molten ink to be ejected in a pattern onto a substrate such as paper or transparency materials, which can be recognized as an image.

The inks can also be employed in indirect (offset) printing ink jet applications, wherein when droplets of the melted ink are ejected in an imagewise pattern onto a recording substrate, the recording substrate is an intermediate transfer member and the ink in the imagewise pattern is subsequently transferred from the intermediate transfer member to a final recording substrate, such as paper or transparency.

Embodiments described above will now be further illustrated by way of the following examples.

### EXAMPLES

### Preparation of pigment dispersion, Extrudate A:

Triamide resin (triamide described in U.S. Patent No. 6,860,930) was processed through a blender to form a powder. Thereafter, 750.72 g of the powderized triamide resin and 239.7 g of NIPEX 150 carbon black (obtained from Degussa Canada, Burlington, Ontario) were admixed in a LITTLEFORD M5 blender for 30 minutes. Subsequently, the powder mixture was added at a rate of 0.8 lbs/hr to a DAVO counter-rotating twin screw extruder (Model VS 104, from Deutsche Apparate-Vertrieborganisation GmbH & Co, Troisdorf, Germany). The contents in the extruder were then mixed at 70°C at 50 RPM. The outlet temperature was set at 75°C. The extruded dispersion (Extrudate A) was then melt-mixed with other ink ingredients to form an ink.

### Ink Example 1

Extrudate A (19.70 g) and PETROLITE CA-11 (5.92 g) (a bis-urethane) from Baker Petrolite were weighed in a 250 ml beaker (A). KEMAMIDE S180 from Crompton Corp. (22.79 g) (a stearamide), KE100 resin from Arakawa Chemical Industries Ltd (16.28 g) (a glyceryl abietate), and NAUGARD N445 from Crompton Corp. (0.18 g) (an antioxidant) were weighed in a separate 250 mL beaker (B). Finally, X1197 polyethylene wax available from Baker Petrolite (81.39 g), and a urethane resin as described in Example 4 of U.S. Patent No. 6,309,453, (3.74 g) were weighed in a third 250 mL beaker (C). Beakers A, B, and C were placed in a 130°C oven and heated for approximately three hours. After two hours of heating, the components in beaker B were stirred with a heated spatula to aid in melting and dissolving the mixture. This stirring with a heated spatula was repeated 30 minutes later. Once the mixture in beaker B was fully dissolved and melted, the contents in beaker B were poured into beaker A.

A Sonic Dismembrator Model 500 Sonifier was then used to sonify the ingredients in beaker A. The sonifier was programmed to sonify the ink for 30 seconds and then pause for 30 seconds, and to repeat this process five times, thus producing a total sonification process time of three minutes. While sonifying, the beaker was rotated to ensure even processing throughout the mixture with the temperature maintained below 130°C. After the first three minute sonification process was completed on beaker A, the beaker was placed back into a 110°C oven for 30 minutes. Subsequently, the same sonification process was repeated on the contents In beaker A. Thereafter, the contents in beaker C were gradually poured into beaker A throughout the first 30 second sonification interval of the third sonification process carried out on beaker A. The carbon black ink thus prepared exhibited a viscosity of 10.8 cps as measured on an AR2000 rheometer from TA Instruments.

The ink was then filtered subsequently through a 1 µm and then a 0.45 µm glass fiber disc filter at 110°C with an applied pressure of 15 psi. The final ink was then cooled to room temperature, approximately 25°C, and tested on a piezo Ink jet printer for weeping.

### Ink Example 2

A carbon black ink was prepared as in Ink Example 1 except that WB-5, a bis-urethane available from Baker Petrolite, was used in place of PETROLITE CA-11. The composition of this ink is shown in Table 1 below.

### Ink Example 3

A carbon black ink was prepared as in ink example 1 except that WB-17, a bis-urethane available from Baker Petrolite, was used in place of PETROLITE CA-11. The composition of this ink is shown in Table 1 below.

### Ink Example 4

A carbon black ink was prepared as in ink example 1 except that instead of Extrudate A, the triamide resin and the NIPEX 150 carbon black were added to beaker A in powder form, and WB-17 was used in place of PETROLITE CA-11. The composition of this ink is shown in Table 1 below.

### Ink Example 5

A carbon black ink was prepared as in ink example 1 except that no Extrudate A was added, and triamide resin was not added. The NIPEX 150 carbon black was added to beaker A in powder form along with WB-17, which was used in place of PETROLITE CA-11. The composition of this ink is shown In Table 1 below

**Table 1 Ink Compositions**

| **Components (wt%)** | **Ink Example 1** | **Ink Example 2** | **Ink Example 3** | **Ink Example 4** | **Ink Example 5** |
|---|---|---|---|---|---|
| **Triamide** | 10.12 | 10.30 | 10.26 | 10.28 | 0 |
| **NIPEX 150** | 3.01 | 3.08 | 3.05 | 3.05 | 3.05 |
| **PETROLITE CA-11** | 3.95 | 0.00 | 0.00 | 0.00 | 0.00 |
| **WB-6** | 0.00 | 2.64 | 0.00 | 0.00 | 0.00 |
| **WB-17** | 0.00 | 0.00 | 2.83 | 2.63 | 12.90 |
| **Stearyl Stearimide** | 15.19 | 1.25 | 15.40 | 15.40 | 15.40 |
| **Glyceryl Abietate** | 10.85 | 10.89 | 11.00 | 11.00 | 11.00 |
| **NAUGARD 445** | 0.12 | 0.12 | 0.12 | 0.12 | 0.12 |
| **Distilled Polyethylene Wax** | 54.28 | 55.20 | 55.00 | 55.00 | 55.00 |
| **Urethane Resin** | 2.50 | 2.54 | 2.53 | 2.53 | 2.53 |
| **TOTAL** | 100.00 | 100.00 | 100.00 | 100.00 | 100.00 |
| **Pigment Dispersion** | Extrudate | Extrudate | Extrudate | Powder | Powder |
| **Viscosity after Filtration (110°C)** | 10.78 | 10.45 | 10.88 | 10.78 | 10.77 |

The inks were printed on the Xerox PHASER® 8400 printers. When Ink Examples 1 and 2 were printed, no ink was observed on the face of the printhead indicating no weeping. Ink Examples 3, 4 and 5 were tested using two purge cycles, and weeping was tested by counting the number of contaminated jets on each print on paper. Table 2 shows the weeping results of Ink Examples 3, 4 and 5 for the first three pages.

**Table 2 Printing results**

| Ink Example No. | Page No. | Number of Contaminated Ink Jets | |
|---|---|---|---|
| | | Purge 1 | Purge 2 |
| 3 | 1 | 6 | 6 |
| | 2 | 1 | 0 |
| | 3 | 0 | 0 |
| 4 | 1 | 12 | 19 |
| | 2 | 6 | 7 |
| | 3 | 6 | 6 |
| 5 | 1 | 72 | 64 |
| | 2 | 37 | 31 |
| | 3 | 27 | 20 |

In Table 2, the "Page #" refers to the three pages printed upon, in order of their printing. The "Purge 1" and "Purge 2° refer to replicate purge cycles which are performed to clear air from the print head upon startup or to clear weak or missing jets which may develop during normal operation.

Ink Example 3 included both the triamide and WB-17, a bis-urethane, and was prepared using the extrusion method. This ink produced no contaminated jets on the third print page indicating substantially no weeping.

Ink Example 4 also included the triamide and WB-17, a bis-urethane. However, the ink was not prepared using the extrusion method. Instead, the triamide and the pigment were used in powder form. This ink produced some contaminated jets on the third print page indicating minor weeping compared to Ink Example 3.

Ink Example 5 was the comparative ink, which only included the WB-17, a bis-urethane, and no triamide. The pigment was added in powder form, as in Ink Example 4. This ink had the highest number of contaminated jets on the third print page indicating significant weeping compared to Ink Examples 3 and 4.

These results indicated that to fully disperse the carbon black pigment in the ink, both the triamide and the WB-17 were required. Also inks prepared by the extrusion method provided a more stable ink.

## Claims

1. A phase change ink comprising an ink vehicle, at least one colorant, at least one triamide and at least one bis-urethane, wherein the at least one bis-urethane has a general formula of: 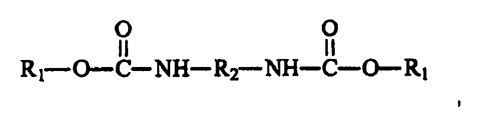 wherein each R₁ is independent of each other (i) an alkyl group having from 1 carbon atoms to 200 carbon atoms, (ii) an aryl group having from 6 carbon atoms to 200 carbon atoms, (iii) an arylalkyl group having from 6 carbon atoms to 200 carbon atoms, or (iv) an alkylaryl group having from 6 carbon atoms to 200 carbon atoms, and R₂ is: (i) an arylene group having from 6 carbon atoms to 200 carbon atoms, (ii) an arylalkylene group having from 7 carbon atoms to 200 carbon atoms, or (iii) an alkylarylene group having from 7 carbon atoms to 200 carbon atoms.

2. The phase change ink according to claim 1, wherein the triamide is a branched triamide.

3. The phase change ink according to claim 2, wherein the branched triamide has a formula of: 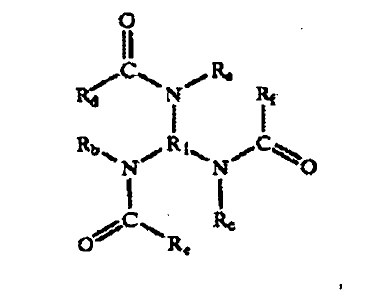 wherein R₁ is (i) an alkylene group having from about 3 carbon atoms to about 200 carbon atoms, (ii) an arylene group having from about 6 carbon atoms to about 200 carbon atoms, (iii) an arylalkylene group having from about 7 carbon atoms to about 200 carbon atoms, or (iv) an alkylarylene group having from about 7 carbon atoms to about 200 carbon atoms, Rₐ, R_{b} and Rₑ are each independently (i) a hydrogen atom, (ii) an alkyl group having from about 1 carbon atoms to about 200 carbon atoms, (iii) an aryl group having from about 6 carbon atoms to about 200 carbon atoms, (iv) an arylalkyl group having from about 6 carbon atoms to about 200 carbon atoms, or (v) an alkylaryl group having from about 6 carbon atoms to about 200 carbon atoms, and R_{d}, Rₑ and R_{f} are each independently (i) an alkyl group having from about 1 carbon atoms to about 200 carbon atoms, (ii) an aryl group having from about 6 carbon atoms to about 200 carbon atoms, (iii) an arylalkyl group having from about 6 carbon atoms to about 200 carbon atoms, or (iv) an alkylaryl group having from about 6 carbon atoms to about 200 carbon atoms.

4. The phase change ink according to claim 2, wherein the branched triamide has a formula of: 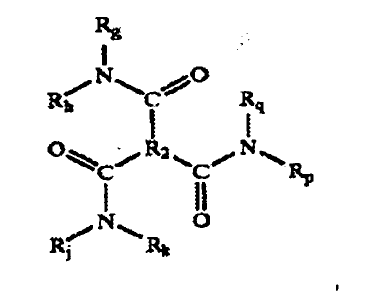 wherein R₂ is (i) an alkylene group having from about 3 carbon atoms to about 200 carbon atoms, (ii) an arylene group having from about 6 carbon atoms to about 200 carbon atoms, (iii) an arylalkylene group having from about 7 carbon atoms to about 200 carbon atoms, or (iv) an alkylarylene group having from about 7 carbon atoms to about 200 carbon atoms and R_{g}, Rₕ, Rⱼ, Rₖ, Rₚ and Rq are each independently (i) a hydrogen atom, (ii) an alkyl group having from about 1 carbon atoms to about 200 carbon atoms, (iii) an aryl group having from about 6 carbon atoms to about 200 carbon atoms, (iv) an arylalkyl group having from about 6 carbon atoms to about 200 carbon atoms, or (v) an alkylaryl group having from about 6 carbon atoms to about 200 carbon atoms.

5. An ink jet system, comprising:
at least one phase change ink and an ink jet device including an ink jet head,
wherein the at least one phase change ink is the phase change ink of claim 1.

6. An ink jet printhead that exhibits substantially no weeping, wherein the ink jet printhead jets the phase change ink according to claim 1.

7. A method of forming the ink of claim 1, comprising:
an extrusion step and a melt-mixing step,
the extrusion step comprising preparing a pigment dispersion mixture in a container by mixing at least one triamide, at least one bis-urethane and at least one colorant to form a mixture, introducing the mixture into an extruder, and extruding the mixture,
the melt-mixing step comprising melt-mixing the extruded mixture together with other ink ingredients including an ink vehicle to form the ink.

8. The method according to claim 7, wherein the triamide is a branched triamide.

9. The method according to claim 8, wherein the branched triamide has a formula of: 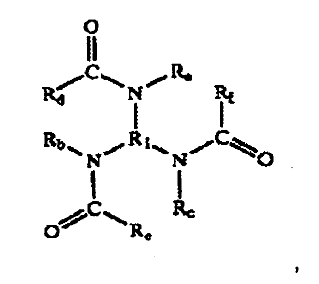 wherein R₁ is (i) an alkylene group having from about 3 carbon atoms to about 200 carbon atoms, (ii) an arylene group having from about 6 carbon atoms to about 200 carbon atoms, (iii) an arylalkylene group having from about 7 carbon atoms to about 200 carbon atoms, or (iv) an alkylarylene group having from about 7 carbon atoms to about 200 carbon atoms, Rₐ, R_{b} and R_{c} are each independently (i) a hydrogen atom, (ii) an alkyl group having from about 1 carbon atoms to about 200 carbon atoms, (iii) an aryl group having from about 6 carbon atoms to about 200 carbon atoms, (iv) an arylalkyl group having from about 6 carbon atoms to about 200 carbon atoms, or (v) an alkylaryl group having from about 6 carbon atoms to about 200 carbon atoms, and R_{d}, Rₑ and R_{f} are each independently (i) an alkyl group having from about 1 carbon atoms to about 200 carbon atoms, (ii) an aryl group having from about 6 carbon atoms to about 200 carbon atoms, (iii) an arylalkyl group having from about 6 carbon atoms to about 200 carbon atoms, or (iv) an alkylaryl group having from about 6 carbon atoms to about 200 carbon atoms.

10. The method according to claim 8, wherein the branched triamide has a formula of: 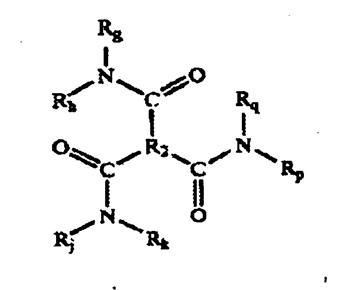 wherein R₂ is (i) an alkylene group having from about 3 carbon atoms to about 200 carbon atoms, (ii) an arylene group having from about 6 carbon atoms to about 200 carbon atoms, (iii) an arylalkylene group having from about 7 carbon atoms to about 200 carbon atoms, or (iv) an alkylarylene group having from about 7 carbon atoms to about 200 carbon atoms and R_{g}, Rₕ, Rⱼ, Rₖ, Rₚ and R_{q} are each independently (i) a hydrogen atom, (ii) an alkyl group having from about 1 carbon atoms to about 200 carbon atoms, (iii) an aryl group having from about 6 carbon atoms to about 200 carbon atoms, (iv) an arylalkyl group having from about 6 carbon atoms to about 200 carbon atoms, or (v) an alkylaryl group having from about 6 carbon atoms to about 200 carbon atoms.

## Patentansprüche

1. Eine Phasenwechseltinte, umfassend ein Tintenvehikel, wenigstens einen Farbstoff, wenigstens ein Triamid und wenigstens ein bis-Urethan, worin das wenigstens eine bis-Urethan die allgemeine Formel 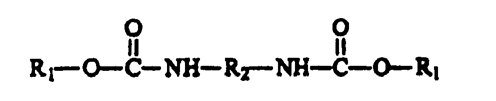 hat,
worin jedes R₁ unabhängig voneinander (i) eine Alkylgruppe mit 1 bis 200 Kohlenstoffatomen, (ii) eine Arylgruppe mit 6 Kohlenstoffatomen bis 200 Kohlenstoffatomen, (iii) eine Arylalkylgruppe mit 6 Kohlenstoffatomen bis 200 Kohlenstoffatomen oder (iv) eine Alkyarylgruppe mit 6 Kohlenstoffatomen bis 200 Kohlenstoffatomen ist und R₂ ist: (i) eine Arylengruppe mit 6 Kohlenstoffatomen bis 200 Kohlenstoffatomen, (ii) eine Arylalkylengruppe mit 7 Kohlenstoffatomen bis 200 Kohlenstoffatomen oder (iii) eine Alkylarylengruppe mit 7 Kohlenstoffatomen bis 200 Kohlenstoffatomen.

2. Die Phasenwechseltinte gemäß Anspruch 1, worin das Triamid ein verzweigtes Triamid ist.

3. Die Phasenwechseltinte gemäß Anspruch 2, worin das verzweigte Triamid die Formel hat: 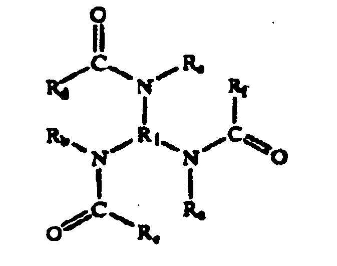 worin R₁ (i) eine Alkylengruppe mit ungefähr 3 Kohlenstoffatomen bis ungefähr 200 Kohlenstoffatomen, (ii) eine Arylengruppe mit ungefähr 6 Kohlenstoffatomen bis ungefähr 200 Kohlenstoffatomen, (iii) eine Arylalkylengruppe mit ungefähr 7 Kohlenstoffatomen bis ungefähr 200 Kohlenstoffatomen oder (iv) eine Alkylarylengruppe mit ungefähr 7 Kohlenstoffatomen bis ungefähr 200 Kohlenstoffatomen ist, Rₐ, R_{b} und R_{c} jeweils unabhängig (i) ein Wasserstoffatom, (ii) eine Alkylgruppe mit ungefähr 1 Kohlenstoffatom bis ungefähr 200 Kohlenstoffatomen, (iii) eine Arylgruppe mit ungefähr 6 Kohlenstoffatomen bis ungefähr 200 Kohlenstoffatomen, (iv) eine Arylalkylgruppe mit ungefähr 6 Kohlenstoffatomen bis ungefähr 200 Kohlenstoffatomen oder (v) eine Alkylarylgruppe mit ungefähr 6 Kohlenstoffatomen bis ungefähr 200 Kohlenstoffatomen sind und R_{d}, Rₑ und R_{f} jeweils unabhängig (i) eine Alkylgruppe mit ungefähr 1 Kohlenstoffatom bis ungefähr 200 Kohlenstoffatomen, (ii) eine Arylgruppe mit ungefähr 6 Kohlenstoffatomen bis ungefähr 200 Kohlenstoffatomen, (iii) eine Arylalkylgruppe mit ungefähr 6 Kohlenstoffatomen bis ungefähr 200 Kohlenstoffatomen, oder (iv) eine Alkylarylgruppe mit ungefähr 6 Kohlenstoffatomen bis ungefähr 200 Kohlenstoffatomen sind.

4. Die Phasenwechseltinte gemäß Anspruch 2, worin das verzweigte Triamid die Formel hat: 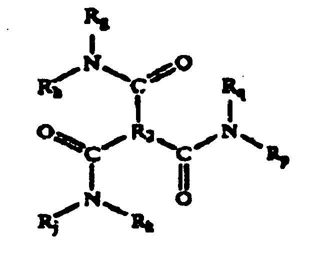 worin R₂ (i) eine Alkylengruppe mit ungefähr 3 Kohlenstoffatomen bis ungefähr 200 Kohlenstoffatomen, (ii) eine Arylengruppe mit ungefähr 6 Kohlenstoffatomen bis ungefähr 200 Kohlenstoffatomen, (iii) eine Arylalkylengruppe mit ungefähr 7 Kohlenstoffatomen bis ungefähr 200 Kohlenstoffatomen oder (iv) eine Alkylarylengruppe mit ungefähr 7 Kohlenstoffatomen bis ungefähr 200 Kohlenstoffatomen ist und R_{g}, Rₕ, Rⱼ, Rₖ, Rₚ und Rq jeweils unabhängig (i) ein Wasserstoffatom, (ii) eine Alkylgruppe mit ungefähr 1 Kohlenstoffatom bis ungefähr 200 Kohlenstoffatomen, (iii) eine Arylgruppe mit ungefähr 1 Kohlenstoffatom bis ungefähr 200 Kohlenstoffatomen, (iv) eine Arylalkylgruppe mit ungefähr 6 Kohlenstoffatomen bis ungefähr 200 Kohlenstoffatomen oder (v) eine Alkylarylgruppe mit ungefähr 6 Kohlenstoffatomen bis ungefähr 200 Kohlenstoffatomen sind.

5. Ein Tintenstrahlsystem, umfassend:
wenigstens eine Phasenwechseltinte und eine Tintenstrahlvorrichtung umfassend einen Tintenstrahlkopf, worin die wenigstens eine Phasenwechseltinte die Phasenwechseltinte von Anspruch 1 ist.

6. Ein Tintenstrahldruckkopf, welcher im Wesentlichen kein Tröpfeln zeigt, worin der Tintenstrahldruckkopf die Phasenwechseltinte gemäß Anspruch 1 ausdruckt.

7. Verfahren zum Bilden einer Tinte gemäß Anspruch 1, umfassend:
einen Extrudierungsschritt und einen Schmelzmischschritt,
der Extrudierungsschritt das Herstellen einer Pigmentdispersionmischung in einem Container durch Mischung wenigstens eines Triamids, wenigstens einem bis-Urethan und wenigstens einem Farbstoff, um eine Mischung zu bilden, Überführen der Mischung in einen Extruder und Extrudieren der Mischung umfasst,
der Schmelzmischungsschritt das Schmelzmischen der extrudierten Mischung zusammen mit weiteren Tintenbestandteilen beinhaltend ein Tintenvehikel, um die Tinte zu bilden, umfasst.

8. Das Verfahren gemäß Anspruch 7, worin das Triamid ein verzweigtes Triamid ist.

9. Das Verfahren gemäß Anspruch 8, worin das verzweigte Triamid die Formel hat: 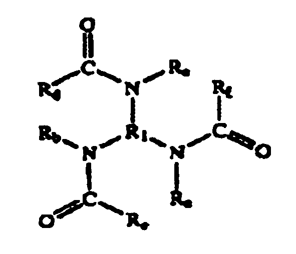 worin R₁ (i) eine Alkylengruppe mit ungefähr 3 Kohlenstoffatomen bis ungefähr 200 Kohlenstoffatomen, (ii) eine Arylengruppe mit ungefähr 6 Kohlenstoffatomen bis ungefähr 200 Kohlenstoffatomen, (iii) eine Arylalkylengruppe mit ungefähr 7 Kohlenstoffatomen bis ungefähr 200 Kohelnstoffatomen oder (iv) eine Aklylarylengruppe mit ungefähr 7 Kohlenstoffatomen bis ungefähr 200 Kohlenstoffatomen ist, Rₐ, R_{b} und R_{c} jeweils unabhängig (i) ein Wasserstoffatom, (ii) eine Alkylgruppe mit ungefähr 1 Kohlenstoffatom bis ungefähr 200 Kohlenstoffatomen, (iii) eine Arylgruppe mit ungefähr 6 Kohlenstoffatomen bis ungefähr 200 Kohlenstoffatomen, (iv) eine Arylalkylgruppe mit ungefähr 6 Kohlenstoffatomen bis ungefähr 200 Kohlenstoffatomen oder (v) eine Alkylarylgruppe mit ungefähr 6 Kohlenstoffatomen bis ungefähr 200 Kohlenstoffatomen sind und R_{d}, Rₑ und R_{f} jeweils unabhängig (i) eine Alkylgruppe mit ungefähr 1 Kohlenstoffatom bis ungefähr 200 Kohlenstoffatomen, (ii) eine Arylgruppe mit ungefähr 6 Kohlenstoffatomen bis ungefähr 200 Kohlenstoffatomen, (iii) eine Arylalkylgruppe mit ungefähr 6 Kohlenstoffatomen bis ungefähr 200 Kohlenstoffatomen, oder (iv) eine Alkylarylgruppe mit ungefähr 6 Kohlenstoffatomen bis ungefähr 200 Kohlenstoffatomen sind.

10. Das Verfahren gemäß Anspruch 8, worin das verzweigte Triamid die Formel hat: 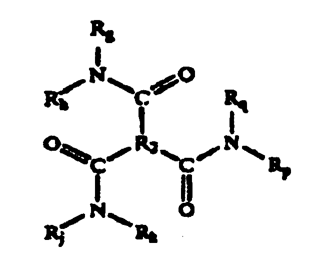 worin R₂ (i) eine Alkylengruppe mit ungefähr 3 Kohlenstoffatomen bis ungefähr 200 Kohlenstoffatomen, (ii) eine Arylengruppe mit ungefähr 6 Kohlenstoffatomen bis ungefähr 200 Kohlenstoffatomen, (iii) eine Arylalkylengruppe mit ungefähr 7 Kohlenstoffatomen bis ungefähr 200 Kohlenstoffatomen oder (iv) eine Alkylarylengruppe mit ungefähr 7 Kohlenstoffatomen bis ungefähr 200 Kohlenstoffatomen ist und R_{g}, Rₕ, Rⱼ, Rₖ, Rₚ und R_{q} jeweils unabhängig (i) ein Wasserstoffatom, (ii) eine Alkylgruppe mit ungefähr 1 Kohlenstoffatom bis ungefähr 200 Kohlenstoffatomen, (iii) eine Arylgruppe mit ungefähr 1 Kohlenstoffatom bis ungefähr 200 Kohlenstoffatomen, (iv) eine Arylalkylgruppe mit ungefähr 6 Kohlenstoffatomen bis ungefähr 200 Kohlenstoffatomen oder (v) eine Alkylarylgruppe mit ungefähr 6 Kohlenstoffatomen bis ungefähr 200 Kohlenstoffatomen sind.

## Revendications

1. Encre à changement de phase comprenant un véhicule d'encre, au moins une matière colorante, au moins un triamide et au moins un bis-uréthane, dans laquelle l'au moins un bis-uréthane a une formule générale de : 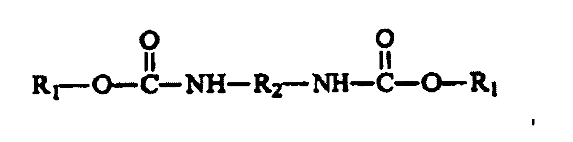 dans laquelle chaque R₁ est indépendamment l'un de l'autre (i) un groupe alkyle ayant de 1 atome de carbone à 200 atomes de carbone, (ii) un groupe aryle ayant de 6 atomes de carbone à 200 atomes de carbone, (iii) un groupe arylalkyle ayant de 6 atomes de carbone à 200 atomes de carbone, ou (iv) un groupe alkylaryle ayant de 6 atomes de carbone à 200 atomes de carbone, et R₂ est : (i) un groupe arylène ayant de 6 atomes de carbone à 200 atomes de carbone, (ii) un groupe arylalkylène ayant de 7 atomes de carbone à 200 atomes de carbone, ou (iii) un groupe alkylarylène ayant de 7 atomes de carbone à 200 atomes de carbone.

2. Encre à changement de phase selon la revendication 1, dans laquelle le triamide est un triamide ramifié.

3. Encre à changement de phase selon la revendication 2, dans laquelle le triamide ramifié a une formule de : 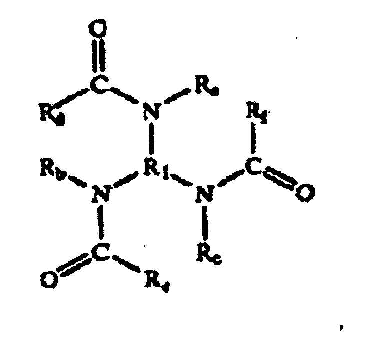 dans laquelle R₁ est (i) un groupe alkylène ayant d'environ 3 atomes de carbone à environ 200 atomes de carbone, (ii) un groupe arylène ayant d'environ 6 atomes de carbone à environ 200 atomes de carbone, (iii) un groupe arylalkylène ayant d'environ 7 atomes de carbone à environ 200 atomes de carbone, ou (iv) un groupe alkylarylène ayant d'environ 7 atomes de carbone à environ 200 atomes de carbone, Rₐ, R_{b} et R_{c} sont chacun indépendamment (i) un atome d'hydrogène, (ii) un groupe alkyle ayant d'environ 1 atome de carbone à environ 200 atomes de carbone, (iii) un groupe aryle ayant d'environ 6 atomes de carbone à environ 200 atomes de carbone, (iv) un groupe arylalkyle ayant d'environ 6 atomes de carbone à environ 200 atomes de carbone, ou (v) un groupe alkylaryle ayant d'environ 6 atomes de carbone à environ 200 atomes de carbone, et R_{d}, Rₑ et R_{f} sont chacun indépendamment (i) un groupe alkyle ayant d'environ 1 atome de carbone à environ 200 atomes de carbone, (ii) un groupe aryle ayant d'environ 6 atomes de carbone à environ 200 atomes de carbone, (iii) un groupe arylalkyle ayant d'environ 6 atomes de carbone à environ 200 atomes de carbone, ou (iv) un groupe alkylaryle ayant d'environ 6 atomes de carbone à environ 200 atomes de carbone.

4. Encre à changement de phase selon la revendication 2, dans laquelle le triamide ramifié a une formule de : 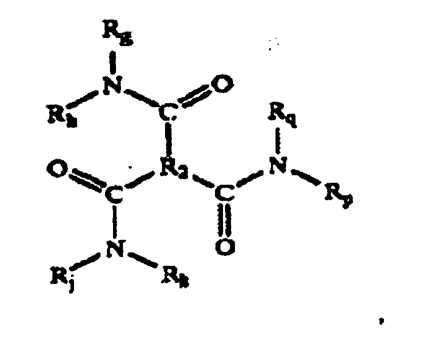 dans laquelle R₂ est (i) un groupe alkylène ayant d'environ 3 atomes de carbone à environ 200 atomes de carbone, (ii) un groupe arylène ayant d'environ 6 atomes de carbone à environ 200 atomes de carbone, (iii) un groupe arylalkylène ayant d'environ 7 atomes de carbone à environ 200 atomes de carbone, ou (iv) un groupe alkylarylène ayant d'environ 7 atomes de carbone à environ 200 atomes de carbone et R_{g}, Rₕ, Rⱼ, Rₖ, Rₚ et Rq sont chacun indépendamment (i) un atome d'hydrogène, (ii) un groupe alkyle ayant d'environ 1 atome de carbone à environ 200 atomes de carbone, (iii) un groupe aryle ayant d'environ 6 atomes de carbone à environ 200 atomes de carbone, (iv) un groupe arylalkyle ayant d'environ 6 atomes de carbone à environ 200 atomes de carbone, ou (v) un groupe alkylaryle ayant d'environ 6 atomes de carbone à environ 200 atomes de carbone.

5. Système à jet d'encre, comprenant :
au moins une encre à changement de phase et un dispositif de jet d'encre incluant une tête de jet d'encre,
dans lequel l'au moins une encre à changement de phase est l'encre à changement de phase selon la revendication 1.

6. Tête d'impression par jet d'encre qui ne présente sensiblement pas de suintement, dans laquelle la tête d'impression par jet d'encre projette l'encre à changement de phase selon la revendication 1.

7. Procédé de formation de l'encre selon la revendication 1, comprenant :
une étape d'extrusion et une étape de mélange à chaud,
l'étape d'extrusion comprenant la préparation d'un mélange en dispersion de pigments dans un récipient en mélangeant au moins un triamide, au moins un bis-uréthane et au moins une matière colorante pour former un mélange, l'introduction du mélange dans une extrudeuse, et l'extrusion du mélange,
l'étape de mélange à chaud comprenant le mélange à chaud du mélange extrudé avec d'autres ingrédients d'encre incluant un véhicule d'encre pour former l'encre.

8. Procédé selon la revendication 7, dans lequel le triamide est un triamide ramifié.

9. Procédé selon la revendication 8, dans lequel le triamide ramifié a une formule de : 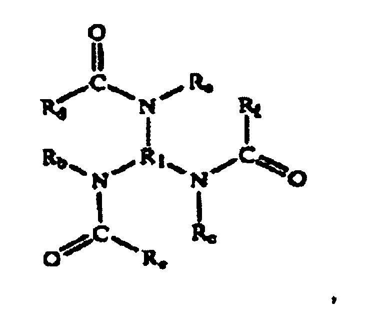 dans laquelle R₁ est (i) un groupe alkylène ayant d'environ 3 atomes de carbone à environ 200 atomes de carbone, (ii) un groupe arylène ayant d'environ 6 atomes de carbone à environ 200 atomes de carbone, (iii) un groupe arylalkylène ayant d'environ 7 atomes de carbone à environ 200 atomes de carbone, ou (iv) un groupe alkylarylène ayant d'environ 7 atomes de carbone à environ 200 atomes de carbone, Rₐ, R_{b} et R_{c} sont chacun indépendamment (i) un atome d'hydrogène, (ii) un groupe alkyle ayant d'environ 1 atome de carbone à environ 200 atomes de carbone, (iii) un groupe aryle ayant d'environ 6 atomes de carbone à environ 200 atomes de carbone, (iv) un groupe arylalkyle ayant d'environ 6 atomes de carbone à environ 200 atomes de carbone, ou (v) un groupe alkylaryle ayant d'environ 6 atomes de carbone à environ 200 atomes de carbone, et R_{d}, Rₑ et R_{f} sont chacun indépendamment (i) un groupe alkyle ayant d'environ 1 atome de carbone à environ 200 atomes de carbone, (ii) un groupe aryle ayant d'environ 6 atomes de carbone à environ 200 atomes de carbone, (iii) un groupe arylalkyle ayant d'environ 6 atomes de carbone à environ 200 atomes de carbone, ou (iv) un groupe alkylaryle ayant d'environ 6 atomes de carbone à environ 200 atomes de carbone.

10. Procédé selon la revendication 8, dans lequel le triamide ramifié a une formule de : 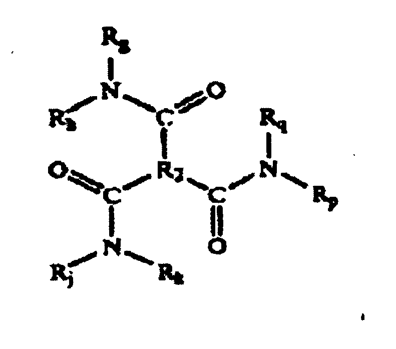 dans laquelle R₂ est (i) un groupe alkylène ayant d'environ 3 atomes de carbone à environ 200 atomes de carbone, (ii) un groupe arylène ayant d'environ 6 atomes de carbone à environ 200 atomes de carbone, (iii) un groupe arylalkylène ayant d'environ 7 atomes de carbone à environ 200 atomes de carbone, ou (iv) un groupe alkylarylène ayant d'environ 7 atomes de carbone à environ 200 atomes de carbone et R_{g}, Rₕ, Rⱼ, Rₖ, Rₚ et Rq sont chacun indépendamment (i) un atome d'hydrogène, (ii) un groupe alkyle ayant d'environ 1 atome de carbone à environ 200 atomes de carbone, (iii) un groupe aryle ayant d'environ 6 atomes de carbone à environ 200 atomes de carbone, (iv) un groupe arylalkyle ayant d'environ 6 atomes de carbone à environ 200 atomes de carbone, ou (v) un groupe alkylaryle ayant d'environ 6 atomes de carbone à environ 200 atomes de carbone.
